Europäisches Patentamt

European Patent Office

Office européen des brevets

(11) Veröffentlichungsnummer: **0 283 461**
**A2**

(12) **EUROPÄISCHE PATENTANMELDUNG**

(21) Anmeldenummer: 88890013.1

(22) Anmeldetag: 26.01.88

(51) Int. Cl.⁴: **B 24 C 1/04**
**B 24 C 3/00**

(30) Priorität: 20.03.87 AT 670/87

(43) Veröffentlichungstag der Anmeldung:
21.09.88 Patentblatt 88/38

(84) Benannte Vertragsstaaten:
**BE CH DE ES FR GB GR IT LI LU NL SE**

(71) Anmelder: **Eckelt, Josef**
**Saass 56**
**A-4421 Aschach (AT)**

(72) Erfinder: **Eckelt, Josef**
**Saass 56**
**A-4421 Aschach (AT)**

(74) Vertreter: **Hübscher, Heiner, Dipl.-Ing. et al**
**Patentanwälte Dipl.-Ing. Gerhard Hübscher, Dipl.-Ing.**
**Helmut Hübscher Dipl.-Ing. Heiner Hübscher**
**Spittelwiese 7**
**A-4020 Linz (AT)**

(54) Verfahren und Vorrichtung zur Randentschichtung beschichteter Glasscheiben für die Isolierglaserzeugung.

㊲ Bei einem Verfahren zur Randentschichtung beschichteter Glasscheiben (1) für die Isolierglaserzeugung, wird die Beschichtung (2) innerhalb einer Randzone (3) mechanisch abgetragen.

Um die Beschichtung (2) in der Randzone (3) gründlich und doch schonend auf rationelle Weise entfernen zu können, erfolgt die Randentschichtung durch ein Sandstrahlen, bei dem Sand quer zum Randverlauf und spitzwinkelig zur Scheibenfläche auf die Randzone (3) geschleudert wird.

EP 0 283 461 A2

## Beschreibung

Verfahren und Vorrichtung zur Randentschichtung beschichteter Glasscheiben für die Isolierglaserzeugung

Die Erfindung bezieht sich auf ein Verfahren zur Randentschichtung beschichteter, insbesondere metallbeschichteter Glasscheiben für die Isolierglaserzeugung, wonach die Beschichtung innerhalb einer Randzone mechanisch abgetragen wird, sowie auf eine Vorrichtung zur Durchführung dieses Verfahrens.

Um Glasscheiben eine Sonnen- oder Wärmeschutzfunktion verleihen zu können, werden sie mit einer dünnen, durchsichtigen Metallschicht ausgestattet. Da diese Beschichtung sehr empfindlich ist und sich nicht an der ungeschützten Außenfläche der Glasscheiben verwenden läßt, werden solche Scheiben zu Isolierglas verarbeitet, bei dem sich dann die Metallbeschichtung der Scheiben im geschützten Innenraum befindet. Die Metallbeschichtung darf sich allerdings wegen der Gefahr einer Zerstörung durch äußere chemische Einflüsse und der dann gegebenen Möglichkeit einer Feuchtigkeitsunterwanderung der Isolierglasrandabdichtung nicht bis an die Scheibenkanten erstrecken, so daß die Glasscheiben innerhalb bestimmter Randzonen, in denen die Isoliergläser abgedichtet werden, von der Metallschicht wieder zu befreien sind, was bisher durch ein Abschleifen mittels Schleifscheiben oder durch ein Abbrennen mittels einer Gas-Sauerstoffflamme durchgeführt wird. Das Abschleifen der Metallbeschichtung ist jedoch recht mühsam und kann das Zurückbleiben von Beschichtungsresten nicht verhindern, wodurch die Haftung der Isolierglasabdichtung in diesen Bereichen gefährdet und die Qualität der Isoliergläser beeinträchtigt wird. Beim Abbrennen der Randzonen wiederum kann es durch Temperaturspannungen zu Mikroeinrissen des Glases kommen, die dann bei Auftreten mechanischer Belastungen durch die Montage, durch Wärmedehnungen, Winddruck u. dgl. verstärkt werden und bis zum Bruch des Glases führen können.

Der Erfindung liegt daher die Aufgabe zugrunde, diese Mängel zu beseitigen und ein Verfahren der eingangs geschilderten Art anzugeben, das auf verhältnismäßig einfache und rationelle Weise eine saubere, vollständige und schonende Randentschichtung mit sich bringt und beste Voraussetzungen für eine sichere Haftung der Isolierglasrandabdichtung gewährleistet. Außerdem soll eine Vorrichtung zur aufwandsarmen Durchführung dieses Verfahrens geschaffen werden.

Die Erfindung löst diese Aufgabe dadurch, daß die Randentschichtung durch ein Sandstrahlen erfolgt, bei dem Sand quer zum Randverlauf und spitzwinkelig zur Scheibenfläche auf die Randzone geschleudert wird. Durch ein solches Sandstrahlen werden die Randzonen rasch und doch schonend und gründlich entschichtet, wobei weder das Entstehen von Mikrosprüngen, noch das Zurückbleiben von Beschichtungsresten zu befürchten sind.

Besonders gute Entschichtungsergebnisse werden erreicht, wenn erfindungsgemäß die Schleuderrichtung des Sandes zur Scheibenfläche um einen maximal 30°-igen Winkel geneigt ist. Der entsprechend flach auftreffende Sandstrahl trägt die Metallschicht mit erforderlicher Intensität ab, ohne dabei aber die Scheibenoberfläche über Gebühr aufzurauhen.

Zum Durchführen des erfindungsgemäßen Randentschichtungsverfahrens eignen sich durchaus bekannte Sandstrahlgeräte, die ein Sand-Luftgemisch herstellen und durch ein Mundstück auf das zu bearbeitende Werkstück schleudern. Das Mundstück braucht dabei lediglich eine in einer Querebene zur Vorschubrichtung spitzwinkelig gegen die Auflage gerichtete Ausströmdüse aufzuweisen, so daß der Sand mit gewünschter Richtung auf die Randzone einer Glasscheibe geschleudert werden kann. Durch eine Vorschubbewegung des Mundstückes relativ zu den zu bearbeitenden Randzonen ergibt sich eine fortschreitende Randentschichtung, wobei sich das Mundstück händisch, aber auch maschinell und automatisch bewegen läßt.

Besitzt die Ausströmdüse einen länglichen, sich in Vorschubrichtung erstreckenden Querschnitt, kommt es zu einem verhältnismäßig breiten Arbeitsbereich des Mundstückes, der ein besonders rationelles Entschichten ermöglicht.

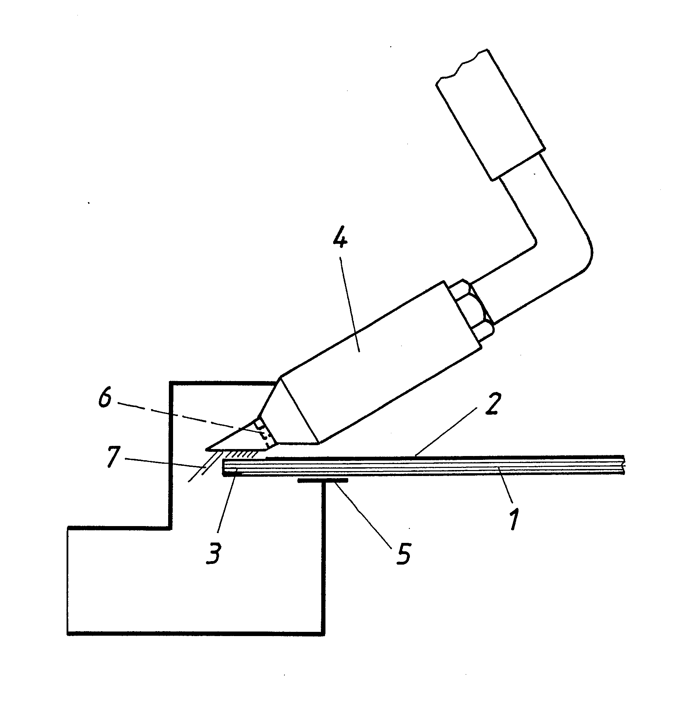

In der Zeichnung ist eine erfindungsgemäße Vorrichtung rein schematisch in einer Seitenansicht veranschaulicht.

Um Glasscheiben 1, die mit einer Metallbeschichtung 2 versehen sind, innerhalb einer bestimmten Randzone 3 sauber und schonend von der Metallbeschichtung 2 befreien zu können, wird Sand quer zum Randverlauf und spitzwinkelig zur Scheibenfläche auf die Randzone 3 geschleudert. Dazu gibt es ein Mundstück 4 eines nicht weiter dargestellten Sandstrahlgerätes, das eine mit entsprechender Neigung gegen eine Werkstückauflage 5 gerichtete Ausströmdüse 6 aufweist. Ein durch die Ausströmdüse 6 das Mundstück 4 verlassender Sandstrahl 7 trifft daher auf die Randzone 3 einer auf die Werkstückauflage 5 aufgelegten Glasscheibe 1 und trägt in dieser Randzone 3 die vorhandene Beschichtung 2 auf rationelle Weise ab. Wird das Mundstück 4 der Randzone 3 entlang verfahren, kommt es zu einer fortschreitenden Randentschichtung, die die Glasscheiben 1 schnell und optimal für eine anschließende Isolierglaserzeugung vorbereitet.

## Patentansprüche

1. Verfahren zur Randentschichtung beschichteter, insbesondere metallbeschichteter Glasscheiben (1) für die Isolierglaserzeugung, wonach die Beschichtung (2) innerhalb einer Randzone (3) mechanisch abgetragen wird, dadurch gekennzeichnet, daß die Randentschichtung durch ein Sandstrahlen erfolgt, bei dem Sand quer zum Randverlauf und spitzwinkelig zur Scheibenfläche auf die Randzone geschleudert wird.

2. Verfahren nach Anspruch 1, dadurch gekennzeichnet, daß die Schleuderrichtung des Sandes zur Scheibenfläche um einen maximal 30°-Winkel geneigt ist.

3. Vorrichtung zur Durchführung des Verfahrens nach Anspruch 1 oder 2, bestehend aus einem Sandstrahlgerät mit einem parallel zu einer Werkstückauflage verschiebbaren Mundstück, dadurch gekennzeichnet, daß das Mundstück (4) eine in einer Querebene zur Vorschubrichtung spitzwinkelig gegen die Auflage (5) gerichtete Ausströmdüse (6) aufweist.

4. Vorrichtung nach Anspruch 3, dadurch gekennzeichnet, daß die Ausströmdüse (6) einen länglichen, sich in Vorschubrichtung erstreckenden Querschnitt besitzt.

0283461